# FASCICULE DE BREVET EUROPEEN

(11) **EP 4 423 413 B1**
(45) Date de publication et mention de la délivrance du brevet: **10.09.2025**
(21) Numéro de dépôt: 22813640.4
(22) Date de dépôt: 20.10.2022
(51) Int. Cl.: F16K 11/085, F16K 31/04, F16K 31/53, F16K 11/16, F01P 7/00, F16K 37/00

(54) **SYSTÈME DE PILOTAGE DE DISTRIBUTION DE FLUIDE DANS UN CIRCUIT HYDRAULIQUE**
SYSTEM ZUR STEUERUNG DER VERTEILUNG EINES FLUIDS IN EINEM HYDRAULISCHEN KREISLAUF
SYSTEM FOR CONTROLLING THE DISTRIBUTION OF FLUID IN A HYDRAULIC CIRCUIT

(30) Priorité: 25.10.2021 FR 2111328
(43) Date de publication de la demande: 04.09.2024
(73) Titulaire: Bontaz Centre, 74460 Marnaz (FR)
(72) Inventeur: DUMANGE, Damien, 74970 Marignier (FR); MOLLER, Guillaume, 74150 Vaulx (FR); DURANDO, Quentin, 74800 Arenthon (FR); LAPERCHE, Matthieu, 74460 Marnaz (FR)
(74) Mandataire: Brevalex
(86) Numéro de dépôt international: PCT/FR2022/051984
(87) Numéro de publication internationale: WO 2023/073309

(56) Documents cités:
- CN-A- 110 822 131
- DE-A1- 102019 130 952
- US-A1- 2015 101 693

## Description

### DOMAINE TECHNIQUE ET ART ANTERIEUR

L'invention se rapporte au domaine de la gestion d'un flux de fluide, par exemple d'eau, dans un circuit hydraulique, par exemple un circuit de refroidissement d'un véhicule.

Actuellement, le pilotage du flux d'eau dans un circuit de refroidissement d'un véhicule peut être réalisé par :
- Un ensemble d'actionneurs motorisés et de vannes On/Off ;
- ou des vanne multi entrées - multi sorties (de type « Octovalve » de Tesla^{®}) ;
- ou des modules de régulation indépendants avec un ou plusieurs actionneurs.

Il se pose le problème de trouver un système ou un dispositif de pilotage plus simple.

Il se pose également le problème de trouver un dispositif ou système de gestion ou de contrôle de la distribution d'un fluide dans un circuit hydraulique, plus simple que les systèmes connus, et pouvant être appliqué à divers fluides.

Il se pose également le problème de trouver un nouveau dispositif de distribution d'un fluide, apte à être intégré dans un système de distribution, et pouvant être appliqué à divers fluides.

DE102019130952 divulgue un agencement de soupapes de commande pour régler au moins deux débits de fluide.

US2015/101693 divulgue une unité de commutation de passage d'écoulement.

CN110822131 divulgue une vanne de commutation de carburant pour réservoir de carburant principal et auxiliaire d'automobile.

### EXPOSÉ DE L'INVENTION

L'invention concerne d'abord un système de pilotage de la distribution d'un fluide dans un circuit hydraulique, selon la revendication 1.

Un tel système est plus simple que les systèmes connus puisqu'un même moteur peut actionner différents distributeurs.

Chaque train d'engrenage peut comporter :
- un premier étage d'engrenages (E_{1.1} - E_{1.d}), dont chaque engrenage est entraîné par ledit moteur;
- un second étage d'engrenages (E_{2.1} - E_{2.d}), dont chaque engrenage est entraîné par le premier étage.

Par exemple :
- dans le premier étage d'engrenages (E_{1.1} - E_{1.d}), chaque engrenage de ce premier étage peut être entraîné par ledit moteur et être associée à un arbre débrayable (A_{1.1}- A_{1.d}) et/ou à des moyens de débrayage;
- un second étage d'engrenages (E_{2.1} - E_{2.d}), dont chaque engrenage est entraîné par un engrenage, ou un arbre associé à un engrenage, du premier étage d'engrenages.

Un système selon l'invention permet d'orienter le flux d'un fluide, par exemple de l'eau, via d distributeurs pilotés indépendamment par un même moteur. Par exemple, ce fluide provient de p pompes est distribuée à l'aide de m entrées (la somme du nombre des entrées de tous les distributeurs) et de n sorties (la somme du nombre des sorties de tous les distributeurs du système).

Selon des modes particuliers de réalisation :
- chaque distributeur (Dᵢ) peut comporter nₑᵢ entrées et nₛᵢ sorties ;
- et/ou chaque distributeur (Dᵢ) peut comporter ou être associé à un capteur de position (C₁- C_{d}) ;
- et/ou le système peut comporter des moyens électroniques de commande du moteur; dans les réalisations encore plus particulières, ces moyens électroniques sont aptes :
   * à commander le moteur en fonction d'un signal ou de signaux d'un ou plusieurs desdits capteurs de position (C₁- C_{d}).
   * et/ou à :
      ° recevoir une consigne de mode de fonctionnement;
      ° déterminer un déplacement cible de chacun des d distributeurs ;
      ° contrôler le moteur en fonction du déplacement cible de chacun de distributeurs.

Selon d'autres modes particuliers de réalisation, chaque arbre :
- est associé à un solénoïde pour l'embrayer ou le débrayer;
- et/ou peut être maintenu en position au repos par un ressort de compression (R₁,...R_{d}).

Chaque distributeur rotatif, ou le système qui l'entraîne, peut comporter :
- un axe de rotation qui entraine ledit noyau du distributeur en rotation autour dudit axe (XX');
- des moyens d'entrainement dudit axe de rotation ;
- des moyens de rappel pour maintenir l'axe de rotation dans une position de repos embrayée ou débrayée par rapport aux moyens d'entrainement ; par exemple ces moyens de rappel comportent un ressort maintenu en compression entre un axe lié au distributeur rotatif et l'axe de rotation qui entraine ledit corps ; l'actionneur est de préférence apte, lorsqu'il est actionné, à comprimer les moyens (Rᵢ) de rappel ;
- des moyens pour débrayer ou embrayer ledit axe depuis sa position de repos, par rapport aux moyens d'entrainement.

Les moyens pour embrayer ou débrayer ledit axe des moyens d'entrainement peuvent par exemple comporter des moyens de type actionneur électromagnétique ou actionneur pneumatique ou actionneur hydraulique.

Dans le cas de moyens de type actionneur électromagnétique, ces moyens comportent par exemple une bobine et un plongeur qui interagit avec le champ généré par la bobine lorsque celle-ci est parcourue par un courant, pour compresser les moyens de rappel.

L'axe de rotation qui entraine ledit noyau et les moyens d'entrainement dudit axe peuvent par exemple comporter chacun une roue dentée formant un engrenage à axe vertical.

Un tel distributeur rotatif peut comporter en outre des moyens de freinage pour freiner le distributeur lorsque celui-ci est débrayé.

Un système de distribution d'un fluide selon l'invention, et/ou un système d'actionnement d'au moins un distributeur d'au moins un fluide, dans un circuit hydraulique, peut comporter:
- au moins une pompe ;
- un système de pilotage de la distribution dudit fluide selon l'invention, telle que définie ci-dessus ou dans la présente demande.

L'invention concerne également un véhicule comportant un moteur, thermique et/ou électrique, au moins un circuit hydraulique et au moins un système distribution d'un fluide dans ce circuit hydraulique selon l'invention, tel que définie ci-dessus ou dans la présente demande.

L'invention concerne également un procédé de pilotage de la distribution d'au moins un fluide dans un circuit hydraulique, mettant en oeuvre un système selon l'invention, tel que décrit ci-dessus ou dans la présente demande.

De préférence, un tel procédé comporte :
- la détermination d'un ou plusieurs distributeurs à actionner ;
- et/ou l'actionnement du ou desdits distributeurs à l'aide du moteur.

Une instruction ou un signal de commande peut être préalablement reçu(e), définissant un mode de fonctionnement, ou une combinaison de position(s) du ou de(s) distributeur(s) à atteindre pour distribuer le fluide selon ce qui est souhaité ou défini par l'instruction ou le signal.

La position d'un ou plusieurs distributeurs peut être connue par une mesure, par exemple par un ou plusieurs capteur(s) de position associé(s) à un ou plusieurs distributeur(s).

Selon une réalisation, le fluide peut être de l'eau, mais d'autres fluides peuvent être concernés, par exemple de l'huile ou du glycol ou un gaz, par exemple de l'air ou de l'hydrogène.

Dans un dispositif ou un procédé selon l'invention, le circuit hydraulique peut être par exemple un circuit de distribution d'un fluide dans un circuit de refroidissement ou un circuit de distribution d'huile ou d'hydrogène ou d'air d'un véhicule ou d'un dispositif, par exemple de type domestique tel qu'une pompe à chaleur.

### BRÈVE DESCRIPTION DES DESSINS

- La figure 1 représente un exemple de réalisation d'un système selon l'invention ;
- La figure 2 représente un exemple de réalisation d'un train d'engrenage en combinaison avec un moteur.
- Les figures 3A-3C représentent un exemple de distributeur rotatif qui peut être mis en œuvre dans un système selon l'invention ;
- La figure 4 représente un exemple de réalisation d'un mécanisme de débrayage d'un distributeur qui peut être mis en œuvre dans un système selon l'invention.

### EXPOSÉ DÉTAILLÉ DE MODES DE RÉALISATION PARTICULIERS

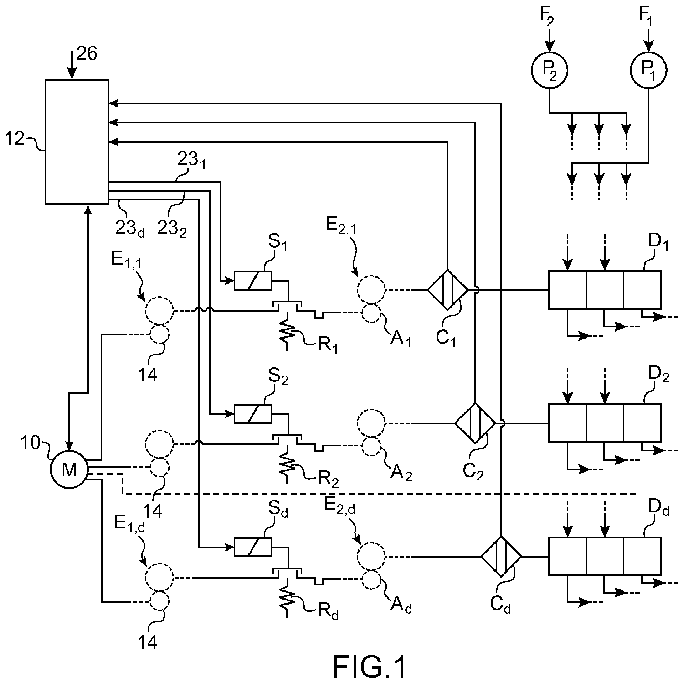

La figure 1 représente un exemple de réalisation d'un circuit hydraulique de distribution de fluide(s) selon l'invention ou auquel l'invention peut être appliquée.

Dans cet exemple, ce circuit comporte 2 pompes P1 et P2, chacune distribuant un fluide F1, F2, mais un nombre différent de pompe(s) et de fluide(s) fait partie du cadre de la présente demande. Le(s) fluide est/sont distribués par des distributeurs Dᵢ rotatifs.

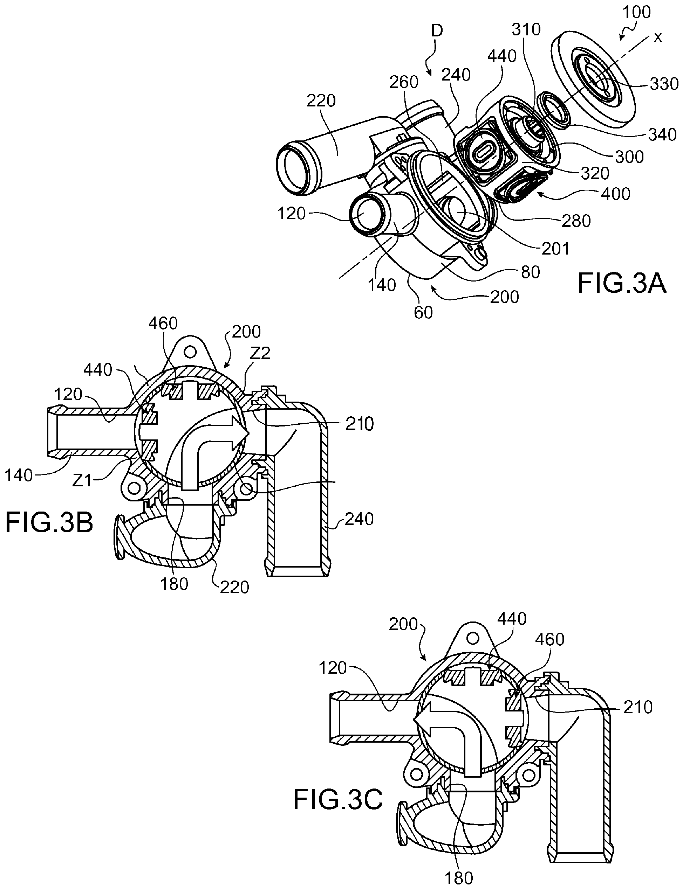

Les figures 3A-3C sont décrites ci-dessous et représentent un exemple de distributeur rotatif Dᵢ pouvant être utilisé dans le cadre de la présente invention.

Un système de pilotage de la distribution des fluides dans ce circuit hydraulique comporte un moteur 10, de préférence sans balai (ou moteur « Brushless »), qui entraine un arbre de sortie central 14 couplé simultanément à d trains d'engrenages (d≥2).

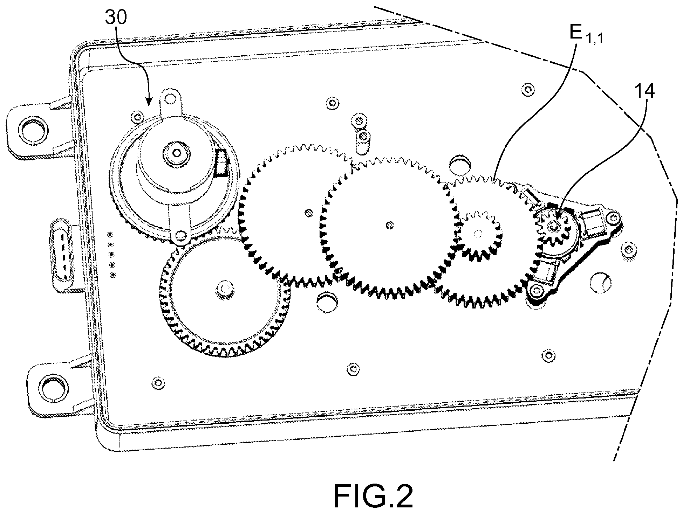

En figure 1, on a représenté l'arbre 14 associé à différents trains d'engrenages, mais ceux-ci sont en fait disposés autour de l'arbre 14 (comme dans l'exemple de la figure 2 pour un train d'engrenages). Des moyens électroniques de commande 12, par exemple réalisés sous la forme d'un circuit imprimé (« PCB »), pilotent ce moteur 10. Les engrenages des différents trains sont de préférence des engrenages droits, avec des axes parallèles.

Chaque train d'engrenages comporte dans cet exemple un premier engrenage (E_{1.1}... E_{1.d}) d'un premier étage d'engrenages.

Chacun de ces engrenages E_{1.1}... E_{1.d} entraine par exemple en rotation un arbre A₁... A₁ qui est embrayable/débrayable indépendamment des autres, à l'aide d'un actionneur, par exemple de type électromagnétique (solénoïde) ou pneumatique ou hydraulique. En figure 1, on a schématiquement représenté des actionneurs électromagnétiques (ou solénoïdes) S₁,...S_{d}. mais d'autres types d'actionneurs sont réalisables (hydraulique, pneumatique). Chaque arbre débrayable peut être maintenu en position au repos par exemple par un ressort de compression R₁,...R_{d}. Chaque actionneur peut être piloté par les moyens électroniques de commande 12.

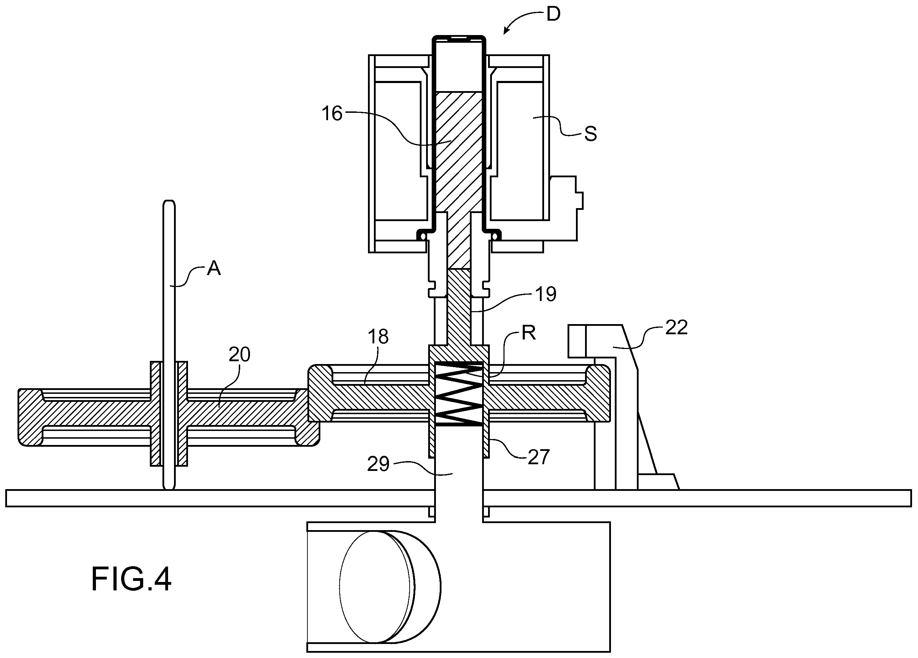

La figure 4 est décrite ci-dessous et représente un exemple de distributeur rotatif Dᵢ avec son actionneur de type électromagnétique, comportant un solénoïde Sᵢ.

Dans l'exemple de réalisation illustré en figure 1, le système comporte un second étage de d engrenages (E_{2.1}... E_{2.d}). Chacun de ces engrenages du second étage peut être relié à un arbre débrayable et entraine un distributeur rotatif D₁... D_{d}. Ces d distributeurs rotatifs sont donc entraînés indépendamment les uns des autres.

On peut noter que l'actionneur peut être associé à n'importe laquelle des roues dentées ou des arbres de chaque train d'engrenages; en figure 1, c'est la roue qui précède immédiatement le distributeur, mais en figure 4 c'est la roue associée au distributeur lui-même. Une roue dentée quelconque de chaque train d'engrenages peut être associée aux moyens d'embrayage et de débrayage, ce qui permet de débrayer ou d'embrayer le distributeur correspondant.

Chacun des d distributeurs peut être associé à un capteur de position C₁-C_{d} qui permet, de préférence à chaque instant, de connaître la position du distributeur auquel il est associé. Un signal de position est envoyé aux moyens 12.

Chaque distributeur rotatif Dᵢ peut comporter nₑᵢ entrées (nₑᵢ >1) et nₛᵢ sorties (nsᵢ >1), un distributeur à une seule entrée (nₑᵢ = 1) comportant plusieurs sorties (nₛᵢ ≥2) et un distributeur à seule sortie (nₛᵢ = 1) comportant plusieurs entrées (nₑᵢ >1). Les sorties sont connectées à des conduits qui amènent le fluide vers une application donnée, par exemple un circuit de refroidissement ou un circuit qui doit être alimenté en huile ou en air (par exemple un circuit de climatisation) ou en hydrogène (par exemple un circuit d'alimentation de piles à combustible). Dans l'exemple de la figure 1, le distributeur D₁ a une entrée et 2 sorties, le distributeur D₂ a 2 entrées et une sortie, le distributeur D_{d} a 2 entrées et 3 sorties ; toute autre combinaison d'entrées/sorties peut être réalisée.

En figure 1, les sorties des distributeurs sont dirigées vers d'autres organes du système hydraulique ; mais, en variante (non représentée), une ou plusieurs sorties d'un ou plusieurs distributeurs sont dirigées vers une ou plusieurs entrées d'un autre ou de plusieurs autres distributeurs.

Un exemple de distributeur rotatif pouvant être mis en œuvre dans le cadre de la présente invention est décrit dans la demande déposée sous le numéro FR-202101137; sa structure est rappelée en figures 3A-3C.

Le système de distribution de fluide comporte par ailleurs un nombre p (p >1) de pompe(s), connectée(s) aux différents distributeurs selon une architecture qui est propre au système de distribution de fluide considéré.

Chacun des d actionneurs S₁,...S_{d} peut être piloté par les moyens 12 en fonction de la position des différents distributeurs ; cette position peut être connue grâce au signal reçu par ces moyens 12 du capteur de position correspondant.

En fonctionnement, les moyens 12 peuvent recevoir du véhicule une consigne 26 de mode de fonctionnement, chaque mode de fonctionnement est défini par l'état embrayé ou débrayé de chaque distributeur et par les positions d'ouverture et de fermeture de toutes les entrées et de toutes les sorties des distributeurs sélectionnés (ou embrayés). Lorsque tous les distributeurs ont un même nombre x de positions possibles, le nombre total de mode est égal à x^{t}. Les données relatives à chaque mode de fonctionnement peuvent être mémorisées dans des moyens de mémorisation associés aux moyens 12 et la position de chaque distributeur peut être connue par les capteurs Cᵢ. La sélection d'un mode de fonctionnement définit donc un état embrayé ou débrayé de chaque distributeur et une position pour chaque distributeur embrayé. Éventuellement, les moyens de mémorisation peuvent mémoriser (ou bien les moyens 12 peuvent calculer):
- dans quel sens et avec quel déplacement angulaire chaque distributeur sélectionné peut être actionné pour le faire évoluer d'un état défini par une certaine combinaison de ses entrées/sorties vers un autre état défini par une autre combinaison de ses entrées/sorties ;
- et/ou l'ordre dans lequel les distributeurs sélectionnés doivent être embrayés; tous peuvent être embrayés de manière simultanée ou de manière séquentielle (et ce dans un certain ordre) ou bien une partie de ces distributeurs peut être embrayée de manière simultanée, l'autre partie étant embrayée de manière séquentielle (là encore selon un certain ordre).

Lorsqu'il est souhaité d'entraîner un ou plusieurs distributeurs dans un sens inverse du sens dans lequel ce ou ces distributeur(s) étai(en)t préalablement entraîné(s), alors on inverse le sens de rotation du moteur 10. Le ou le(s) distributeur(s) dont le sens de rotation n'est pas inversé peuvent être débrayés. Lorsqu'on souhaite entrainer un ou plusieurs distributeurs dans un sens inverse du sens dans lequel un ou plusieurs autres distributeur(s) est/sont à entraîner, alors on peut débrayer ces derniers.

En fonction du mode de fonctionnement sélectionné, ces moyens 12 peuvent actionner les moyens d'embrayage ou de débrayage du ou des distributeurs sélectionnés, et actionner ce ou ces distributeurs en déterminant par exemple le sens et le déplacement angulaire de chacun des distributeurs concernés, ainsi que l'ordre ou la séquence d'activation (séquentielle ou simultanée comme décrit ci-dessus).

Le moteur 10 est alors alimenté, et en fonction de la séquence déterminée et de la position de chacun des d distributeurs, les axes sont embrayés (ou pas) de manière séquentielle ou simultanée jusqu'à ce que chacun des d distributeurs ait atteint la position souhaitée.

Ce système permet donc de remplacer un produit composé de plusieurs vannes pilotées par autant d'actionneurs « Brushless » par un ensemble de distributeurs hydrauliques pilotés par un unique moteur 10, par exemple sans balai ou pas-à-pas, et un mécanisme d'embrayage et de débrayage associé à chacun des distributeurs.

Les moyens 12, réalisés par exemple sous la forme d'un circuit imprimé, peuvent comporter par exemple un processeur ou un micro-processeur programmé pour contrôler les moyens d'embrayage/débrayage de chaque distributeur et le moteur 10 selon une pluralité de modes de fonctionnement tels que définis ci-dessus et/ou pour calculer l'actionnement d'un ou plusieurs des distributeurs en fonction d'un mode de fonctionnement sélectionné par un opérateur ou un véhicule.

La figure 2 représente un exemple de réalisation d'un seul train d'engrenage en combinaison avec un moteur. On voit sur cette figure l'axe 14 du moteur, ainsi que le premier étage E_{1.1}. Autour du moteur peuvent être agencés d'autres trains d'engrenage identiques ou similaires à celui présenté sur la figure 2.

Les figures 3A-3C représentent un exemple de distributeur rotatif qui peut être mis en œuvre dans un système selon l'invention.

Il comporte une entrée et deux sorties, mais on comprend qu'il peut comporter une ou plusieurs entrées et une ou plusieurs sorties.

Ce distributeur comporte un boîtier 200 ou corps de vanne, de forme essentiellement cylindrique de révolution autour d'un axe X, et une partie centrale 400, désignée noyau, montée dans le boîtier 200 et apte à tourner dans le boîtier 200.

Dans l'exemple représenté, le boîtier 200 comporte un fond 60 et une paroi latérale 80 sensiblement cylindrique d'un seul tenant, et un couvercle 100 pour fermer le boîtier. Le couvercle 100 est par exemple solidarisé au boîtier 200 par soudage, par exemple par soudage à ultrason.

Le boitier 200 comporte un orifice 180, dit orifice d'alimentation, formé dans la paroi latérale 80 et un conduit d'alimentation 220, par exemple soudé sur la base de l'orifice 180 et destiné à une connexion à une source de fluide, par exemple une pompe telle que l'une des pompes P1, P2 de la figure 1. De part et d'autre de cet orifice d'entrée 180, le boîtier 200 comporte également :
- un premier orifice de sortie 210 formé dans la paroi latérale 80, se prolongeant par un conduit 240 (ou conduit de distribution) destiné à amener le liquide vers une zone donnée, par exemple une zone à refroidir ;
- et un deuxième 120 orifice de sortie prolongé par un conduit 140, (ou conduit de distribution) destiné à amener le liquide vers une autre zone donnée.

Ces orifices de sortie sont destinés à distribuer un fluide lorsque l'un ou l'autre d'entre eux est positionné en face de l'entrée d'un conduit de distribution. L'un ou l'autre de ces orifices de sortie est amené devant cette entrée d'un conduit de distribution en effectuant une rotation du distributeur autour de l'axe XX' et le fluide sort alors du distributeur avec une direction dans un plan perpendiculaire à l'axe XX'. Il peut y avoir plusieurs conduits de distribution et plusieurs entrées correspondantes de ces conduits, tous et toutes disposé(e)s dans ce plan perpendiculaire à l'axe XX'. Autrement dit, ce type de distributeur distribue un ou plusieurs fluides dans ce plan, c'est-à-dire que le ou les fluides ainsi distribués sortent du distributeur en ayant de préférence une direction d'écoulement qui est dans ce plan perpendiculaire à cet axe XX'. De même, le fluide à distribuer entre dans le distributeur avec une direction d'écoulement qui est de préférence dans ce même plan perpendiculaire à cet axe XX'.

Les conduits 140 et 240 sont par exemple soudés sur la base des orifices 120 et 210 respectivement. Le boîtier 200 définit une chambre hydraulique 260. Les orifices de sortie 120 et 210 sont répartis angulairement sur la paroi latérale autour de l'axe X de part et d'autre de l'orifice d'alimentation 180.

Le noyau 400 est destiné à être monté dans la chambre hydraulique et est apte à tourner autour de l'axe XX'. il comporte deux faces d'extrémité 280, 300 et une surface latérale 320. Il comporte lui-même au moins un conduit qui permet de relier une entrée 201 et une sortie 203 (comme on le comprend des figures 3B et 3C, l'entrée 201, en fonction de la position du noyau autour de l'axe XX, peut devenir la sortie, et inversement pour la sortie 203).

La face d'extrémité 280 est en regard du fond du boîtier et la face d'extrémité 300 est en regard du couvercle. La face d'extrémité 300 comporte une empreinte en creux 310 destinée à recevoir l'extrémité d'un arbre d'un actionneur, arbre de préférence aligné selon l'axe XX' (ou axe mécanique et/ou d'entrainement du distributeur). Le couvercle 100 comporte une ouverture 330 en regard de l'empreinte 310 pour permettre l'accouplement avec l'arbre. En variante, la face d'extrémité 300 comporte un organe d'accouplement en saillie destiné à pénétrer dans une empreinte en creux formée dans l'arbre de l'actionneur. Un joint 340 est avantageusement prévu entre la face d'extrémité 300 et le couvercle bordant l'empreinte 310 pour éviter les fuites de fluide.

Le noyau 400 peut comporter également un premier joint 440 destiné à obturer l'orifice de sortie 120, lorsqu'ils sont en regard, et éventuellement un deuxième joint 460 et destiné à obturer l'orifice de sortie 210, lorsqu'ils sont en regard. Le premier joint 440 et le deuxième joint 460 sont de forme identique ou similaire, ainsi que leur montage sur le noyau.

Comme déjà expliqué ci-dessus, ce distributeur permet d'effectuer une distribution de fluide latéralement, en fonction de l'orientation, autour de l'axe vertical XX', du noyau du distributeur : le, ou chacun des, fluide(s) qui est/sont ainsi distribué(s), en sortie du distributeur, a une direction d'écoulement dans le plan perpendiculaire à l'axe XX'.

Ainsi, en figure 3B, dans une 1^{re} position, le distributeur amène le fluide vers la sortie 210 ; en figure 3C, dans une 2^{e} position, après avoir effectué une rotation autour de l'axe XX', le distributeur amène le fluide vers la sortie 120.

La figure 4 représente un distributeur rotatif D, par exemple du type décrit ci-dessus en lien avec les figures 3A-3C, muni d'un axe de sortie 29 (ou axe mécanique de sortie et/ou d'entrainement), et son actionneur, ici de type électromagnétique ; ce dernier comporte un solénoïde S qui, lorsqu'il est actionné, actionne un plongeur 16 selon l'axe XX' en direction de l'axe 29, mouvement qui va venir comprimer le ressort R; le plongeur possède les propriétés magnétiques pour interagir avec le champ généré lorsque le solénoïde est parcouru par un courant et être ainsi amené en direction du distributeur rotatif D. Le plongeur pousse ainsi un axe 19 solidaire d'une roue dentée 18, qui s'engrène alors avec une autre roue 20, montée sur un arbre A, qui peut être actionné lui - même par le moteur 10, ou par des moyens d'entrainement (cette roue fait elle-même partie d'un train d'engrenages) entrainés par le moteur 10. La roue 18 peut être prolongée dans sa partie centrale par une paroi cylindrique 27, laquelle comporte des moyens (clavettes par exemple), ou embrayage ou moyens formant embrayage, qui lui permettent d'être couplés à l'axe de sortie 29 du distributeur, tout en permettant une translation de l'ensemble comportant la paroi 27, la roue 18 et l'axe 19, par rapport à l'axe 29. Lorsque le plongeur a poussé l'axe 19 vers le distributeur D, ce dernier est embrayé. Lorsque l'action du solénoïde se relâche, le ressort R repousse l'ensemble 18-19-27 qui passe alors en débrayage. Le dispositif peut en outre comporter un frein 22 qui permet de freiner le distributeur (la roue dentée 18) lorsque celui-ci est débrayé. Le solénoïde peut être commandé par des moyens tels que les moyens 12 décrits ci-dessus. Un tel distributeur rotatif D peut être utilisé dans un système tel que décrit ci-dessus en lien avec les figures 1 et 2.

De préférence, comme on peut le voir sur cette figure, l'axe de sortie 29 du distributeur est aligné avec l'actionneur les moyens actionneurs S, 16. Il y a donc un alignement vertical, ou sur le même axe, du distributeur et de l'actionneur des moyens actionneurs.

Lorsque le ressort de rappel emmène (repousse) les moyens 18, 19 selon la direction verticale (il les repousse et les éloigne donc du distributeur), ces moyens sont découplés du distributeur, mais le corps du distributeur lui-même reste dans la même position.

Autrement dit, les moyens d'actionnement S, 16 sont situés dans l'axe XX' du distributeur et peuvent être couplés à, ou découplés de, celui-ci sans modifier la position de ce dernier selon l'axe vertical XX'.

L'actionneur représenté ici est de type électromagnétique. Mais, un autre type d'actionneur, par exemple de type pneumatique ou hydraulique, peut-être choisi, qui, comme en figure 4, sera également aligné avec l'axe de sortie 29 du distributeur et aura également une direction d'actionnement selon l'axe XX'; en particulier, il comprimera les moyens (R) de rappel pour embrayer les moyens d'entraînement avec le distributeur, lesdits moyens (R) de rappel repoussant au contraire les moyens d'entraînement pour les débrayer par rapport au distributeur, ce dernier gardant toujours la même position selon l'axe vertical XX'. L'actionneur se déplace linéairement, le long de l'axe défini par l'axe de sortie 29, ou axe de sortie mécanique et/ou d'entrainement, du distributeur. Par exemple, lorsque l'actionneur est actionné en direction du distributeur, il comprime les moyens de rappel ; lorsque l'actionneur est actionné en sens inverse, en direction opposée au distributeur, les moyens de rappel se relâchent et/ou reviennent à leur position de repos.

La roue, ou couronne, dentée 18 n'est pas toujours solidaire du distributeur : en position débrayée, elle est découplée ou désolidarisée de celui-ci, en fonction de l'état du ressort (ou des moyens de rappel) ; là encore, le distributeur garde toujours la même position selon l'axe vertical XX'.

Une application d'un système selon l'invention concerne la distribution d'un flux d'eau de refroidissement dans un circuit de refroidissement d'un véhicule. Mais d'autres applications peuvent être concernées, par exemple la distribution d'huile ou de gaz (par exemple de l'air ou de l'hydrogène) dans un véhicule (voiture ou camion, à moteur thermique ou électrique ou hybride ; ou bateau ou engin volant), ou encore la distribution d'un fluide dans une application domestique, par exemple une pompe à chaleur.

## Revendications

1. Système de pilotage de la distribution d'un fluide dans un circuit hydraulique, comportant :
- un moteur (10), par exemple un moteur sans balai ;
- une pluralité de d distributeurs rotatifs (D₁-D_{d}) dudit fluide, chaque distributeur comportant un boitier (200), ledit boitier comportant au moins une entrée (180) et au moins une sortie (120, 210), un axe de sortie mécanique (29) de chaque distributeur s'étendant suivant une direction (XX'), chaque distributeur comportant un noyau (400) rotatif dans un plan perpendiculaire à l'axe de sortie mécanique (29) dudit distributeur;
- une pluralité de d trains d'engrenages (E_{1.1} - E_{1.d}, E_{2.1} - E_{2.d}), chaque train assurant la transmission du mouvement du moteur à un desdits distributeurs rotatifs, dit distributeur rotatif associé, chaque train d'engrenage comportant des moyens (S₁ - S_{d}), comportant un actionneur, pour embrayer ou débrayer le distributeur rotatif associé, par rapport au train d'engrenages, **caractérisé en ce que** :
- la somme du nombre d'entrées et du nombre de sorties de chaque boitier étant supérieure ou égale à 3 ;
- ledit actionneur est apte à se déplacer le long de l'axe défini par l'axe de sortie mécanique (29) du distributeur.

2. Système selon la revendication 1, chaque train d'engrenages comportant au moins deux étages d'engrenage :
- un premier étage d'engrenages (E_{1.1} - E_{1.d}), dont chaque engrenage est entraîné par ledit moteur (10);
- un second étage d'engrenages (E_{2.1} - E_{2.d}), dont chaque engrenage est entraîné par le premier étage,
un engrenage étant muni de moyens (S₁ - S_{d}) pour l'embrayer ou le débrayer.

3. Système selon l'une des revendications 1 ou 2, chaque distributeur rotatif (Dᵢ) comportant :
- nₑᵢ entrées et nₛᵢ sorties ;
- et/ou un capteur de position (C₁- C_{d}).

4. Système selon l'une des revendications 1 à 3, comportant des moyens électroniques (12) de commande du moteur (10).

5. Système selon la revendication 4 :
- chaque distributeur rotatif (Dᵢ) comportant un capteur de position (C₁-C_{d}), lesdits moyens électroniques (12) étant aptes à commander le moteur (10) en fonction d'un signal ou de signaux d'un ou plusieurs desdits capteurs de position (C₁- C_{d}) ;
- et/ou les moyens électroniques (12) étant aptes à :
- recevoir une consigne (26) de mode de fonctionnement;
- déterminer une position cible de chacun des d distributeurs rotatifs;
- contrôler le moteur (10) et les moyens pour embrayer ou débrayer chaque distributeur rotatif en fonction de la position cible de chacun des distributeurs rotatifs.

6. Système selon l'une des revendications 1 à 5, le circuit hydraulique étant un circuit de distribution d'un fluide dans un circuit de refroidissement ou un circuit de distribution d'huile ou d'hydrogène d'un véhicule.

7. Système selon l'une des revendications 1 à 6, les moyens pour embrayer ou débrayer chaque distributeur rotatif comportant un actionneur, de type électromagnétique (S₁,...S_{d}), par exemple une bobine et un plongeur qui interagit avec le champ généré par la bobine lorsque celle-ci est parcourue par un courant, ou pneumatique ou hydraulique.

8. Système selon l'une des revendications 1 à 7, comportant, pour chaque distributeur rotatif :
- un axe de rotation (19) qui entraine le noyau du distributeur en rotation autour dudit axe (XX');
- des moyens (20) d'entrainement dudit axe de rotation (19);
- des moyens (R) de rappel, les moyens (Rᵢ) de rappel comportant par exemple un ressort maintenu en compression entre un axe lié au distributeur rotatif et l'axe de rotation (19ᵢ) qui entraine ledit noyau, pour maintenir l'axe de rotation (19) dans une position de repos débrayée par rapport aux moyens (20) d'entrainement ;
- des moyens (16) pour débrayer ou embrayer ledit axe depuis sa position de repos, par rapport aux moyens (20) d'entrainement.

9. Système selon la revendication 8, l'actionneur étant apte, lorsqu'il est actionné, à comprimer les moyens (Rᵢ) de rappel.

10. Système selon l'une des revendications 8 ou 9, l'axe de rotation (19) qui entraine le noyau (400) du distributeur et les moyens (20ᵢ) d'entrainement dudit axe de rotation (19) comportant chacun une roue dentée (18ᵢ, 20ᵢ) formant un engrenage à axe vertical.

11. Système selon l'une des revendications 8 à 10, comportant en outre des moyens (22ᵢ) de freinage pour freiner le distributeur lorsque celui-ci est débrayé.

12. Système de distribution d'un fluide dans un circuit hydraulique, comportant :
- au moins une pompe ;
- un système de pilotage de la distribution dudit fluide selon l'une des revendications 1 à 11.

13. Véhicule comportant un moteur, thermique et/ou électrique, au moins un circuit hydraulique et au moins un système distribution d'un fluide, par exemple d'huile ou d'hydrogène, dans ce circuit hydraulique selon la revendication 12.

14. Procédé de pilotage de la distribution d'un fluide dans un circuit hydraulique à l'aide d'un système selon l'une des revendications 1 à 12 ou dans un véhicule selon la revendication 13, comportant :
- la sélection d'un ou plusieurs distributeurs rotatifs (D₁-D_{d}) à actionner ;
- l'actionnement du ou desdits distributeurs (D₁-D_{d}) à l'aide du moteur (10) et des moyens pour embrayer ce ou ces distributeurs,
ce procédé pouvant comporter la sélection ou la détermination d'un sens et/ou d'un angle de rotation d'un ou plusieurs distributeurs à actionner et l'actionnement du ou desdits distributeurs rotatifs selon ce sens et/ou cet angle de rotation.

15. Procédé selon la revendication 14, dans lequel :
- le fluide est de l'eau ou de l'huile ou du glycol ou un gaz, par exemple de l'air ou de l'hydrogène ;
- et/ou le circuit hydraulique est un circuit de refroidissement ou circuit de distribution d'huile ou d'hydrogène d'un véhicule.

## Patentansprüche

1. Steuersystem für die Verteilung eines Fluids in einem Hydraulikkreislauf, umfassend:
- einen Motor (10), beispielsweise einen bürstenlosen Motor;
- eine Vielzahl von Drehverteilern (D₁ -D_{d}) des Fluids, wobei jeder Verteiler ein Gehäuse (200) aufweist, wobei das Gehäuse mindestens einen Eingang (180) und mindestens einen Ausgang (120, 210) aufweist, wobei sich eine mechanische Ausgangsachse (29) jedes Verteilers in einer Richtung (XX') erstreckt, wobei jeder Verteiler einen Kern (400) aufweist, der sich in einer Ebene senkrecht zur mechanischen Ausgangsachse (29) des Verteilers dreht;
- eine Vielzahl von Getriebesätzen (E_{1.1} - E_{1.d}, E_{2.1} - E_{2.d}), wobei jeder Satz die Übertragung der Bewegung des Motors an einen der Drehverteiler, dem zugehörigen Drehverteiler, sicherstellt, wobei jeder Getriebesatz Mittel (S₁ - S_{d}) aufweist, die einen Aktuator zum Ein- oder Auskuppeln des zugehörigen Drehverteilers in Bezug auf den Getriebesatz aufweisen, **dadurch gekennzeichnet, dass**:
- die Summe der Anzahl der Eingänge und der Anzahl der Ausgänge jedes Gehäuses größer oder gleich 3 ist;
- der Aktuator sich entlang der durch die mechanische Ausgangsachse (29) des Verteilers definierten Achse bewegen kann.

2. System nach Anspruch 1, wobei jeder Getriebesatz mindestens zwei Getriebestufen aufweist:
- eine erste Getriebestufe (E_{1.1} - E_{1.d}), von der jedes Getriebe durch den Motor (10) angetrieben wird;
- eine zweite Getriebestufe (E _{2.1} - E _{2.d} ), wobei jedes Getriebe von der ersten Stufe angetrieben wird,
ein Getriebe, das mit Mitteln (S₁ - S_{d}) zum Ein- oder Auskuppeln ausgestattet ist.

3. System nach einem der Ansprüche 1 oder 2, wobei jeder Drehverteiler (Dᵢ) Folgendes umfasst:
- nₑᵢ Eingänge und nₛᵢ Ausgänge;
- und/oder einen Positionssensor (C₁ -C_{d}).

4. System nach einem der Ansprüche 1 bis 3, mit elektronischen Mitteln (12) zur Steuerung des Motors (10).

5. System nach Anspruch 4:
- wobei jeder Drehverteiler (Dᵢ) einen Positionssensor (C₁ - C_{d}) aufweist, wobei die elektronischen Mittel (12) in der Lage sind, den Motor (10) in Abhängigkeit von einem oder mehreren Signalen eines oder mehrerer der Positionssensoren (C₁ - C_{d}) zu steuern;
- und/oder wobei die elektronischen Mittel (12) zu Folgendem geeignet sind:
- Empfangen eines Sollwerts (26) für den Betriebsmodus;
- Bestimmen einer Zielposition jeden der Drehschieber bestimmen;
- den Motor (10) und die Mittel zum Ein- oder Auskuppeln jedes Drehverteilers in Abhängigkeit von der Zielposition jedes Drehverteilers prüfen.

6. System nach einem der Ansprüche 1 bis 5, wobei der Hydraulikkreislauf ein Kreislauf zur Verteilung eines Fluids in einem Kühlkreislauf oder ein Kreislauf zur Verteilung von Öl oder Wasserstoff eines Fahrzeugs ist.

7. System nach einem der Ansprüche 1 bis 6, das Mittel zum Ein- oder Auskuppeln jedes Drehverteilers, der einen Aktuator vom elektromagnetischen Typ (S₁ ,...S_{d}) aufweist, beispielsweise eine Spule und einen Tauchkolben, der mit dem von der Spule erzeugten Feld interagiert, wenn diese von einem Strom oder pneumatisch oder hydraulisch durchflossen wird.

8. System nach einem der Ansprüche 1 bis 7, umfassend für jeden Drehverteiler:
- eine Drehachse (19), die den Verteilerkern um die Achse (XX') dreht;
- Mittel (20) zum Antrieb der Drehachse (19);
- Rückstellmittel (R), wobei die Rückstellmittel (Rᵢ) beispielsweise eine Feder aufweisen, die in Kompression zwischen einer mit dem Drehverteiler verbundenen Achse und der Drehachse (19ᵢ) gehalten wird, die den Kern antreibt, um die Drehachse (19) in einer im Verhältnis zu den Mitteln zum Antrieb (20) ausgekuppelten Ruhestellung zu halten;
- Mittel (16) zum Aus- oder Einkuppeln der Achse aus ihrer Ruhestellung in Bezug auf die Mittel (20) zum Antrieb.

9. System nach Anspruch 8, wobei der Aktuator in der Lage ist, die Rückstellmittel (Rᵢ) zusammenzudrücken, wenn es betätigt wird.

10. System nach einem der Ansprüche 8 oder 9, wobei die Drehachse (19) den Kern (400) des Verteilers antreibt und die Mittel (20ᵢ) zum Antrieb der Drehachse (19) jeweils ein Zahnrad (18ᵢ, 20ᵢ) umfassen, das ein Getriebe mit vertikaler Achse bildet.

11. System nach einem der Ansprüche 8 bis 10, ferner umfassend Bremsmittel (22ᵢ) zum Bremsen des Verteilers, wenn dieser ausgekuppelt ist.

12. System zur Verteilung eines Fluids in einem Hydraulikkreislauf, das Folgendes aufweist:
- mindestens eine Pumpe;
- ein Steuersystem für die Verteilung des Fluids nach einem der Ansprüche 1 bis 11.

13. Fahrzeug mit einem Motor, einem Verbrennungsmotor und/oder einem Elektromotor, mindestens einem Hydraulikkreislauf und mindestens einem System zur Verteilung eines Fluids, beispielsweise von Öl oder Wasserstoff, in diesem Hydraulikkreislauf nach Anspruch 12.

14. Verfahren zur Steuerung der Verteilung eines Fluids in einem Hydraulikkreislauf mithilfe eines Systems nach einem der Ansprüche 1 bis 12 oder in einem Fahrzeug nach Anspruch 13, das Folgendes aufweist:
- die Auswahl eines oder mehrerer zu betätigender Drehverteiler (D₁ -D_{d});
- das Betätigen des oder der Verteiler (D₁ -D_{d}) mithilfe des Motors (10) und der Mittel zum Einkuppeln dieses oder dieser Ventile,
wobei dieses Verfahren das Auswählen oder Bestimmen einer Drehrichtung und/oder eines Drehwinkels eines oder mehrerer zu betätigender Verteiler und das Betätigen des oder der Drehverteiler entsprechend dieser Drehrichtung und/oder dieses Drehwinkels aufweisen kann.

15. Verfahren nach Anspruch 14, wobei:
- das Fluid Wasser oder Öl oder Glykol oder ein Gas, beispielsweise Luft oder Wasserstoff ist;
- und/oder der Hydraulikkreislauf ein Kühlkreislauf oder Öl- oder Wasserstoffverteilungskreislauf eines Fahrzeugs ist.

## Claims

1. A system for controlling the distribution of a fluid in a hydraulic circuit, including:
- a motor (10), for example a brushless motor;
- a plurality of d rotary distributors (D₁-D_{d}) of said fluid, each distributor including a housing (200), said housing including at least one inlet (180) and at least one outlet (120, 210), a mechanical output axis (29) of each distributor extending in a direction (XX'), each distributor including a core (400), rotating in a plane perpendicular to the mechanical output axis (29) of said distributor;
- a plurality of d gear trains (E_{1.1} - E_{1.d}, E_{2.1} - E_{2.d}), each train ensuring the transmission of the movement of the motor to one of said rotary distributors, called associated rotary distributor, each gear train including means (S₁ - S_{d}), including an actuator, for engaging or disengaging the associated rotary distributor, relative to the gear train,
**Characterised in that**:
- the sum of the number of inlets and the number of outlets of each body being greater than or equal to 3,
- said actuator being able to move along the axis defined by the mechanical output axis (29) of the distributor.

2. System according to claim 1, each gear train including at least two gear stages:
- a first stage of gears (E_{1.1}- E_{1.d}), each gear of which is driven by said motor (10);
- a second stage of gears (E_{2.1} - E_{2.d}), each gear of which is driven by the first stage,
a gear being provided with means (S1 - Sd) for engaging it or disengaging it.

3. System according to one of claims 1 or 2, each rotary distributor (Dᵢ) including:
- nₑᵢ inlets and nₛᵢ outlets;
- and/or a position sensor (C₁- C_{d}).

4. System according to one of claims 1 to 3, including electronic means (12) for controlling the motor (10).

5. System according to claim 4:
- each rotary distributor (Dᵢ) comprising a position sensor (C₁- C_{d}), said electronic means (12) being capable of controlling the motor (10) according to a signal or signals from one or more of said position sensors (C₁- C_{d});
- and/or the electronic means (12) being capable of:
- receiving an operating mode instruction (26);
- determining a target position of each of the d rotary distributors;
- controlling the motor (10) and the means for engaging or disengaging each rotary distributor according to the target position of each of the rotary distributors.

6. System according to one of claims 1 to 5, the hydraulic circuit being a distribution circuit for a fluid in a cooling circuit or an oil or hydrogen distribution circuit of a vehicle.

7. System according to one of claims 1 to 6, the means for engaging or disengaging each rotary distributor including an actuator, of electromagnetic type (S₁,...S_{d}), for example a coil and a plunger which interacts with the field generated by the coil when a current flows therethrough, or of pneumatic or hydraulic type.

8. System according to one of claims 1 to 7, including, for each rotary distributor:
- an axis of rotation (19) which rotates the body of the distributor around said axis (XX');
- means (20) for driving said axis of rotation (19);
- return means (R), the return means (Rᵢ) including for example a spring held in compression between an axis connected to the rotary distributor and the axis of rotation (19ᵢ) which drives said body, to maintain the axis of rotation (19) in a disengaged rest position relative to the drive means (20);
- means (16) for disengaging or engaging said axis from its rest position, relative to the drive means (20).

9. System according to claim 8, the actuator being capable, when actuated, of compressing the return means (Rᵢ).

10. System according to one of claims 8 or 9, the axis of rotation (19) which drives the body (400) of the distributor and the means (20ᵢ) for driving said axis of rotation (19) each including a toothed wheel (18ᵢ, 20ᵢ) forming a gear with a vertical axis.

11. System according to one of claims 8 or 9, further including braking means (22ᵢ) for braking the distributor when it is disengaged.

12. System for distributing a fluid in a hydraulic circuit, including:
- at least one pump;
- a system for controlling the distribution of said fluid according to one of claims 1 to 11.

13. Vehicle including a thermal and/or electric engine, at least one hydraulic circuit and at least one fluid, for example oil or hydrogen, distribution system in this hydraulic circuit according to claim 12.

14. Method for controlling the distribution of a fluid in a hydraulic circuit using a system according to one of claims 1 to 12 or in a vehicle according to claim 13, including:
- selecting one or more rotary distributors (D₁-D_{d}) to be actuated;
- actuating said distributor(s) (D₁-D_{d}) using the motor (10) and the means for engaging this/these distributor(s),
said method possibly including the selection or determination of a direction and/or an angle of rotation of one or more distributors to be actuated and the actuation of said rotary distributor(s) in this direction and/or this angle of rotation.

15. Method according to claim 14, wherein:
- the fluid is water or oil or glycol or a gas, for example air or hydrogen;
- and/or the hydraulic circuit is a cooling circuit or oil or hydrogen distribution circuit of a vehicle.
